# NEUE EUROPÄISCHE PATENTSCHRIFT

(11) **EP 0 257 014 B2**
(45) Veröffentlichungstag und Bekanntmachung des Hinweises auf die Entscheidung über den Einspruch: **29.01.1997**
(45) Hinweis auf die Patenterteilung: 21.10.1992
(21) Anmeldenummer: 87890136.2
(22) Anmeldetag: 15.06.1987
(51) Int. Cl.: F16K 1/02, F16K 1/48, F16K 47/02

(54) **Geräuscharmes Ventil**
Low noise valve
Soupape silencieuse

(30) Priorität: 13.08.1986 YU 1438/86; 12.01.1987 YU 31/87
(43) Veröffentlichungstag der Anmeldung: 24.02.1988
(73) Patentinhaber: Airolla Invest Limited, Hong Kong (HK); Zebeljanovic, Radomir, YU-22310 Simanovci (YU); Stijelja, Radoljub, YU-22310 Simanovci (YU)
(72) Erfinder: Pesovic, Predrag, YU-22310 Simanovci (YU); Zebeljanovic, Radomir, YU-22310 Simanovci (YU); Stijelja, Radoljub, YU-22310 Simanovci (YU)
(74) Vertreter: Linser, Heinz

(56) Entgegenhaltungen:
- EP-A- 0 073 855
- EP-A- 0 321 500
- DE-C- 1 022 068
- GB-A- 774 226
- US-A- 1 370 875
- US-A- 1 988 966
- US-A- 2 441 038

## Beschreibung

Die Erfindung bezieht sich auf ein Ventil, bestehend aus einem topfförmigen Kopfstück, in das eine axial gesicherte, mit einem Gewinde versehene Spindel hineinragt, auf welche ein gegen Drehung gesicherter, gegen die Innenwand des Kopfstückes abgedichteter Kolbenhalter aufgeschraubt ist, der an seiner Stirnseite Haken aufweist, die den Flansch eines im Kolbenhalter zentrierten, aus dem Kopfstück herausragenden Kolbens umfangen.

Ein solches Ventil, dessen Spindel nur drehbeweglich, nicht aber axialbeweglich ist und dessen Dichtung gegen einen Ventilsitz gedrückt wird, ist aus der US-A-1 370 875 seit langem bekannt. Ein ähnliches Ventil mit nicht aufsteigendem Drehgriff ist in der DE-C-1 022 068 beschrieben worden. Aus der GB-A 774 226 ist ferner ein Ventil mit einem Einsatz bekannt, der mit Haken einen Flansch des eigentlichen Ventilkörpers umfängt. Schließlich sei noch erwähnt, daß die Sicherung von Ventileinsatzteilen gegen Drehung mit Hilfe von in Nuten eingreifenden Rippen oder Zähnen ebenfalls seit langem notorisch ist (vgl. US-A-1 988 966). Die eingangs genannten Ventile weisen eine Reihe von Nachteilen auf. Durch diese Art des Schließens kommt es zu übertriebenem oder ungenügendem Festdrehen der Gummidichtung auf dem Ventilsitz, was zur Erosion des Ventilsitzes führte. Die Folge davon ist das Tropfen der Ventile, was eine Reparatur der Ventilsitze erfordert, die -abhängig vom Schadensgrad - ein- bis zweimal durchführbar ist.

Ein weiterer Nachteil dieser bekannten Ventile liegt darin, daß es zu starker Abnutzung und Reibung zwischen der Gewindespindel und der Schraubenmutter kommt, durch welche die Gewindespindel geführt wird. Der Nachteil solch erhöhter Reibung zwischen den beweglichen Elementen ist die Erhöhung des Spiels zwischen ihnen, was während der Ventilfunktion zu Vibrationen der beweglichen Bestandteile des Ventils führt. Durch den Flüssigkeitsdruck enstehen sodann hydraulische Schläge, welche sich auf die ganze Installation übertragen, weshalb sich die bekannten Ventile als sehr geräuschvoll erwiesen haben.

Ein anderer Nachteil der bekannten Ventile besteht darin, daß alle Ventilelemente, außer den Gewindeelementen, aus demselben Material hergestellt werden. Wenn daher ein solches Ventil lange nicht benutzt wird oder wenn die Temperaturschwankungen zu groß sind, kommt es von Zeit zu Zeit zur Blockierung der Spindel, wenn das Ventil geöffnet werden soll.

Die Nachteile der bekannten Ventile können in zwei Hauptgruppen eingeteilt werden. Entweder tritt geräuschvolle Kavitation während des Ventilbetriebs auf, oder - im Falle der Kavitationsbeseitigung - es liegt immer noch das Geräuschproblem bzw. die geräuschvolle Funktion der Ventile vor.

Vom Stand der Technik ausgehend, besteht die Aufgabe der Erfindung darin ein solches Ventil zu verwirklichen, welches im geschlossenen Zustand vollkommen dichtet, zu keiner Kavitation führt, im geöffneten Zustand geräuscharm ist und auch nach längeren Betriebspausen eine Drehung der Spindel ohne zu blockieren gewährleistet.

Diese Aufgabe wird erfindungsgemäß dadurch gelöst, daß der Kolben gekreuzte Rippen sowie zwei diametral gegenüberliegende Vorsprünge aufweist und mit seinem Kopf aus einer an die offene Stirnseite des topfförmigen Kopfstücks angesetzten, eine den Kopf umgebende Dichtung tragenden Büchse herausragt, wobei die Vorsprünge des Kolbens in Nuten der Büchse eingreifen und im Mantel der Büchse vier jeweils zwischen den gekreuzten Rippen des Kolbens befindliche, bei geschlossenem Ventil durch eine in Nuten der Rippen eingesetzte Dichtung überdeckte Austrittsöffnungen ausgebildet sind, daß das Gewinde der Spindel am freien Ende in zwei diametral gegenüberliegende, Zähne ausmündet und am schaftseitigen Ende des Gewindes zwei diametral gegenüberliegende, gewindeabschnittsförmige Zähne ausgebildet sind sowie daß auf die Spindel an der dem Kolben gegenüberliegenden Seite des Kolbenhalters eine geschlitzte Sicherungsscheibe aufgeschoben ist, die an ihrer dem Kolbenhalter zugekehrten Seite zwei jeweils längs eines Halbkreises gekrümmte, in Form von schiefen Ebenen ausgeführte, den gewindeabschnittsförmigen Zähnen angepaßte Zähne aufweist.

Die Sicherungsscheibe kann an ihrer dem Kolbenhalter zugekehrten Seite drei vorspringende Zähne aufweisen, von denen zwei diametral gegenüberliegen und die alle in korrespondierende Nuten des Kolbenhalters eingreifen. Überdies kann sie einen im wesentlichen ringförmigen Wulst aufweisen, der einen am Ende des Kolbenhalters ausgebildeten Flansch umfängt.

Zweckmäßigerweise endet das Innengewinde des Kolbenhalters am Gewindegrund an zwei diametral gegenüberliegenden, den Zähnen des Gewindes der Spindel zugeordneten Anschlägen.

Die Erfindung wird anhand eines in den Zeichnungen dargestellten Ausführungsbeispiels näher erläutert. Es zeigen
- Fig. 1: einen Längsschnitt durch das erfindungsgemäße Ventil,
- Fig. 2: den Kolbenhalter im Längsschnitt A-A der Fig. 4,
- Fig. 3: den Kolbenhalter von Fig. 2 von unten,
- Fig. 4: den Kolbenhalter von Fig. 2 von oben,
- Fig.5: den Längsschnitt der Sicherungsscheibe von Fig. 6 nach der Linie B-B und
- Fig. 6: die Sicherungsscheibe von Fig. 5 von oben.

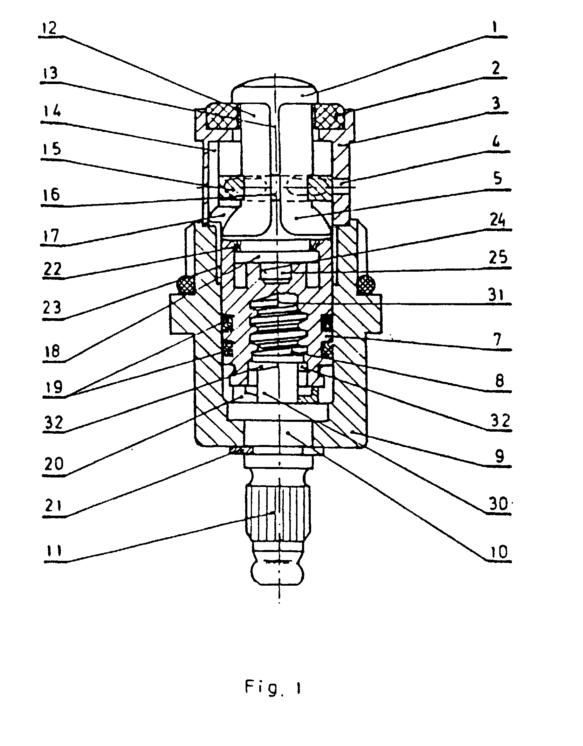

In Fig. 1 ist ein Sechskantkopfstück 9 dargestellt, in dessen zylindrischem Innenteil eine Spindel 10 eingesetzt ist, welche an der Außenseite des Sechskantkopfstückes 9 durch eine Sicherungsklammer 21 gegen axiales Versetzen gesichert wird. Auf das Gewinde 8 der Spindel 10 ist ein Kolbenhalter 7 aufgeschraubt, welcher gegen das Sechkantkopfstück 9 durch Dichtungen 19 aus rundem Gummi abgedichtet ist, welche in entsprechende Nuten auf der Außenseite des Kolbenhalters 7 eingesetzt sind.

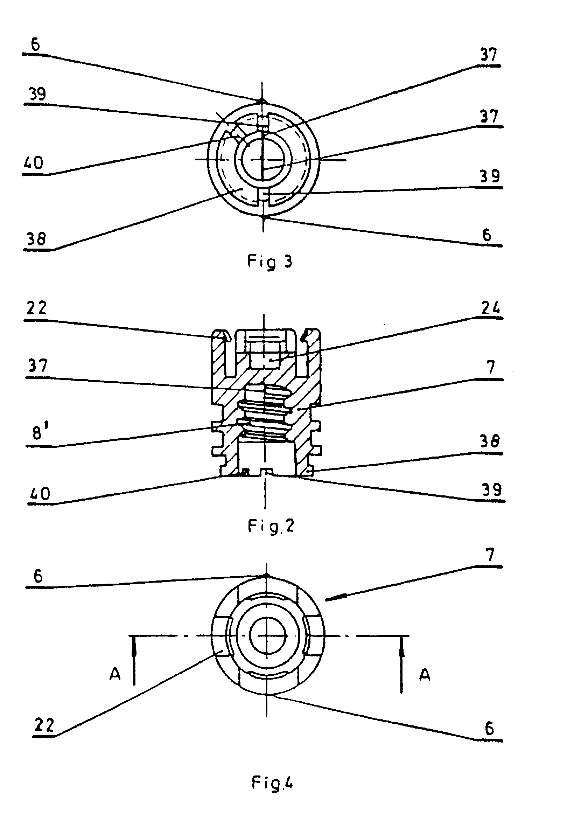

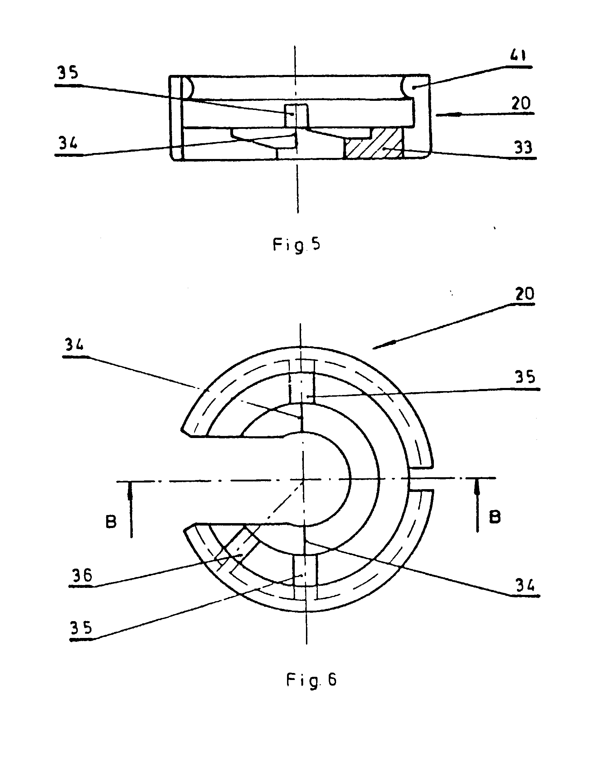

In den Fig. 2, 3 und 4 ist der Kolbenhalter 7 dargestellt, dessen Stirn mit einer Bohrung 24 zum Zentrieren eines Kolbens 1 ausgeführt ist und auch Haken 22 aufweist, welche wegen ihrer Elastizität einen Flansch 18 des Kolbens 1 umfangen. Auf dem Kolbenhalters 7, und zwar am Außenmantel entlang, sind Vorsprünge 6 ausgeführt, welche mit Zähnen 23. zusammenwirken, die als Innenverzahnung am Ende des Sechskantkopfstückes 9 ausgearbeitet sind. Die Vorsprünge 6 sind diametral gegenüberliegend am Kolbenhalter 7 ausgeführt.

Die in Fig. 1 dargestellte Spindel 10 des geräuscharmen Ventils, ist am Anfang und Ende des Gewindes 8 mit Zähnen 31 bzw 32, welche einander paarweise diametral gegenüberliegen, ausgeführt. Analog dazu, in Fig. 2, 3 und 4 dargestellt, ist der Kolbenhalter 7 mit einem Innengewinde 8' versehen, das an gegenüberliegenden Anschlägen 37 endet, gegen welche die Zähne 31 des Gewindes 8 der Spindel 10 frontal stoßen, und zwar nach deren Einschrauben in den Kolbenhalter 7. Durch frontales Aufeinanderstoßen der Zähne 31 und der Anschläge 37 wird mit Sicherheit ein Blockieren der Spindel 10 verhindert.

An einem Flansch 38 des Kolbenhalters 7 sind zwei diametral gegenüberliegende Nuten 39 sowie um 45° versetzt eine dritte Nut 40 ausgebildet, in welche Zähne 35 und 36 einer Sicherungsscheibe 20 (in Fig. 5 und 6 gezeigt) eingreifen.

In Fig. 5 und 6 ist die Sicherungsscheibe 20 dargestellt, welche aus einer Grundplatte 33 be-steht, auf der - jeweils längs eines Halbkreises gekrümmte, in Form einer schiefen Ebene - Zähne 34 ausgeführt sind, die bei offenem Ventil an den Zähnen 32 der Spindel 10 anliegen. Auf der Grundplatte 33 der Sicherungsscheibe 20 sind zwei diametral gegenüberliegende Zähne 35 sowie um 45° versetzt ein dritter Zahn 36 ausgebildet. Die Sicherungsscheibe 20 hat einen Wulst 41, welcher bei der Montage der Sicherungscheibe 20 den Flansch 38 des Kolbenhalters 7 umfängt.

Der in Fig. 1 dargestellte Kolben 1 ist aus Plastikmasse gegossen und hat gekreuzte Rippen 12, 13, welche zum Leiten des Fluids dienen. Die Rippen 12, 13 gehen auf einer Seite in einen erweiterten Kolbenfuß 5 über, auf welchem diametral entgegengesetzt und in einem Stück mit dem Kolben 1 Vorsprünge 17 vorgesehen sind, die zum Führen des Kolbens 1 dienen und ein Schwenken des Kolbens verhindern. Unter dem Kolbenfuß 5 befinden sich der Flansch 18, den die Haken 22 des Kolbenhalters 7 umfangen, und ein Zapfen 25, welcher in die Bohrung 24 des Kolbenhalters 7 reicht. Über die Stirn des Kolbens 1 ist eine Dichtung 15 gezogen, welche in Nuten 16 eingesetzt ist, die in den Rippen 12, 13 ausgebildet sind.

An die Stirnseite des Sechskantkopfstückes 9 ist eine Büchse 3 angesetzt, welche an ihrer Stirnseite eine Ausnehmung zur Aufnahme einer Dichtung 2 aufweist. Die Büchse 3 hat im Innenteil zwei diametral entgegengesetzt angeordnete Nuten 14, in welchen die Vorsprünge 17 des Kolbens 1 geführt werden. Die Büchse 3 ist an ihrem Mantel mit Austrittsöffnungen 4 versehen, die sich in einer um 45° bezüglich der Rippen 12, 13 des Kolbens 1 verdrehten Position befinden. Dies gewährleistet die Funktion der Rippen 12, 13 als Fluidleiter beim Ausfließen in Richtung der Austrittsöffnungen 4. Bei geschlossenem Ventil deckt die Dichtung 15 alle vier Austrittsöffnungen 4 am Mantel der Büchse 3 ab. Die Dichtung 15 ist dünnwandig und aus Plastikmasse hergestellt.

Das geräuscharme Ventil gemäß der Erfindung funktioniert auf folgende Weise:
Das Ventil, welches in Fig. 1 dargestellt ist, kann in ein neues Ventilgehäuse eingeschraubt werden, oder in ein vorher repariertes Ventilgehäuse, welches einen gefrästen Ventilsitz aufweist, gegen den die Gummidichtung 2 des Ventils gedrückt wird.

Durch Drehung eines Handgriffes (nicht gezeigt), welcher auf den Spindelkopf 11 der Spindel 10 aufgesetzt ist, entgegen dem Uhrzeigersinn wird das Gewinde 8 aus dem Kolbenhalter 7 gedreht, wobei sich der drehgesicherte Kolben 1 nach oben verschiebt. Der Kopf des Kolbens 1 hebt sich daher von der Gummidichtung 2 ab und bildet einen kleinen ringförmigen Schlitz, durch welchen das Fluid fließt und den Innenteil der Büchse 3 füllt, wobei die plastische dünnwandige Dichtung 15 mit ihrer unteren Kante die Unter Kanten der Austrittsöffnungen 4 der Büchse 3 noch nicht überschritten hat, das Innere der Büchse 3 ober mit Fluid gefüllt ist. Durch weiteres Drehen der Spindel 10 in dieselbe Richtung tritt der Kolben 1 immer mehr hervor, es formt sich eine größere ringförmige Öffnung und die Dichtung 15 öffnet die Austrittsöffnungen 4, wodurch das Fluid durch die Austrittsöffnungen 4 fließen kann und es zur Druckentlastung im Innenteil der Büchse 3 kommt. Die gekreuzten Rippen 12, 13 leiten die Fluidströme in Richtung der Austrittsöffnungen 4. Das Schließen des Ventils verläuft in umgekehrter Richtung, wobei zuerst die Austrittsöffnungen 4 geschlossen werden und erst danach der Kopf des Kolbens 1 auf die Gummidichtung 2 trifft und den Durchfluß vollkommen abschließt.

Wie in Fig. 1 zu ersehen ist, wird der Kolben 1 anhand der Vorsprünge 17 vertikal geführt und hat keine Möglichkeit des Schwenkens, sodaß das durch die Rippen 12, 13 geleitete Fluid immer in derselben Richtung fließt.

Das Ventil gemäß der Erfindung kann weder durch übertriebenes Festdrehen der Spindel 10 noch durch übertriebenes Aufdrehen der Spindel 10 durch den Handgriff (welcher hier nicht gezeigt ist) beschädigt werden. Im Sechskantkopfstück 9, und zwar an der Innenseite im Frontteil, der immer in Berührung mit dem Fluid (z.B. Wasser) steht, sind Zähne 23 ausgeführt, welche mit den Vorsprüngen 6 des Kolbenhalters 7 in Verbindung sind. Beim Schließen des Ventils (durch Drehen der Spindel 10 im Uhrzeigersinn) wird der Kopf des Kolbens 1 auf die Gummidichtung 2 mit einer gewissen Kraft gepreßt. Sobald die Zähne 31 der Spindel 10 auf die Auschläge 37 des Innengewindes 8' des Kolbenhalters 7 auftreffen, kommt es zu erhöhtem Widerstand, sodaß sich die Spindel 10 samt dem Kolbenhalter 7 weiterdreht, wobei die elastischen Vorsprünge 6 über die Zähne 23 springen, während die Haken 22 um den Flansch 18 des Kolbens 1 gleiten. Dies ist durch Geräusche begleitet, die Signalisieren, daß das Ventil genügend geschlossen ist und ein weiters Drehen des Handgriffes nicht mehr nötig ist und keinen Nutzen hat. Derselbe Gleiteffekt wird auch bei offenem Ventil erlangt, wenn der Handhaber gedenkt, den Handgriff weiter zu drehen, denn die Zähne 32 der Spindel 10 treffen frontal auf die Zähne 34 der Sicherungsscheibe 20 auf. Das Blockieren der Spindel 10 bzw. ihres Gewindes 8 wird somit unmöglich gemacht.

Das Ventil gemäß Fig. 1 ist außer der Gummidichtung 2, der Dichtung 19 und der Sicherungs-klammer 21 aus Plastikmasse gearbeitet. Eine Kavitation des Ventils wird vermieden. Neben geringer Reibung wird eine lange Lebensdauer der unaufwendig hergestellten Elemente gewährleistet.

Experimentell wurde festgestellt, daß das Ventil gemäß der Erfindung im Gegensatz zu anderen bekannten Ventilen sehr verläßlich und vollkommen geräuscharm in seiner Funktion ist. Wegen der Rippen 12, 13 des Kolbens 1, der Austrittsöffnungen 4 an der Büchse 3 und der Dichtung 15 ist praktisch ein geräuschloses Ventil erlangt worden.

## Patentansprüche

1. Ventil, bestehend aus einem topfförmigen Kopfstück (9), in das eine axial gesicherte, mit einem Gewinde (8) versehene Spindel (10) hineinragt, auf welche ein gegen Drehung gesicherter, gegen die Innenwand des Kopfstücks (9) abgedichteter Kolbenhalter (7) aufgeschraubt ist, der an seiner Stirnseite Haken (22) aufweist, die den Flansch (18) eines im Kolbenhaiter (7) zentrierten, aus dem Kopfstück (9) herausragenden Kolbens (1) umfangen, dadurch gekennzeichnet, daß der Kolben (1) gekreuzte Rippen (12, 13) sowie zwei diametral gegenüberliegende Vorsprünge (17) aufweist und mit seinem Kopf aus einer an die offene Stirnseite des topfförmigen Kopfstücks (9) angesetzten, eine den Kopf umgebende Dichtung (2) tragenden Büchse (3) herausragt, wobei die Vorsprünge (17) des Kolbens (1) in Nuten (14) der Büchse (3) eingreifen und im Mantel der Büchse (3) vier jeweils zwischen den gekreuzten Rippen (12, 13) des Kolbens (1) befindliche, bei geschlossenem Ventil durch eine in Nuten (16) der Rippen (12, 13) eingesetzte Dichtung (15) überdeckte Austrittsöffnungen (4) ausgebildet sind, daß das Gewinde (8) der Spindel (10) am freien Ende in zwei diametral gegenüberliegende Zähne (31) ausmündet und am schaftseitigen, Ende des Gewindes (8) zwei diametral gegenüberliegende, gewindeabschnittsförmige Zähne (32) ausgebildet sind sowie daß auf die Spindel (10) an der dem Kolben (1) gegenüberliegenden Seite des Kolbenhalters (7) eine geschlitzte Sicherungsscheibe (20) aufgeschoben ist, die an ihrer dem Kolbenhalter (7) zugekehrten Seite zwei jeweils längs eines Halbkreises gekrümmte, in Form von schiefen Ebenen ausgeführte, den gewindeabschnittsförmigen Zähnen (32) angepaßte Zähne (34) aufweist.

2. Ventil nach Anspruch 1, dadurch gekennzeichnet, daß die Sicherungsscheibe (20) an ihrer dem Kolbenhalter (7) zugekehrten Seite drei vorspringende Zähne (35, 36) aufweist, von denen zwei diametral gegenüberliegen und die alle in korrespondierende Nuten (39, 40) des Kolbenhalters (7) eingreifen, sowie daß die Sicherungsscheibe (20) einen im wesentlichen ringförmigen Wulst (41) aufweist, der einen am Ende des Kolbenhalters (7) ausgebildeten Flansch (38) umfängt.

3. Ventil nach Anspruch 1 oder 2, dadurch gekennzeichnet, daß das Innengewinde (8') des Kolbenhalters (7) am Gewindegrund an zwei diametral gegenüberliegenden, den Zähnen (31) des Gewindes (8) der Spindel (10) zugeordneten Anschlägen (37) endet.

## Revendications

1. Valve consistant en une tête en forme de pot (9) dans laquelle s'étend une broche (10) axialement bloquée, pourvue d'un filet (8), broche (10) sur laquelle est vissé un support de piston (7) qui est scellé contre la paroi intérieure de la tête (9) et bloqué pour empêcher la rotation, lequel support de piston (7) présente des crochets (22) sur sa face frontale qui entourent la flasque (18) d'un piston (1) qui est centré dans le support de piston (7) et qui sort de la tête (9), caractérisée en ce que le piston (1) comporte des nervures en croix (12,13) et deux projections (17) diamétralement opposées, et que la tête de piston s'étend en saillie d'une douille (3) qui est logée dans la face frontale ouverte de la tête en forme de pot (9) et qui porte un joint d'étanchéité (2) qui entoure la tête, les projetions (17) du piston (1) s'engageant dans des rainures (14) de la douille (3) et quatre ouvertures de sortie (4) étant formées dans le fourreau de la douille (3), ouvertures qui sont situées entre les nervures en croix (12, 13) du piston (1) et couvertes par une étanchéité (15) insérée dans des rainures (16) dans les nervures (12, 13) lorsque la valve est fermée; que le filet (8) de la broche (10) en son extrémité libre débouche dans deux dents (31) diamétralement opposées et que deux dents (22) diamétralement opposées, ayant la forme de la section du filet, sont formées sur l'extrémité de la tige du filet (8), et qu'une rondelle frein fendue (20) est glissée sur la broche (10) à l'extrémité du support de piston (7) opposé au piston (1), laquelle rondelle frein fendue (20) présente sur son côté dirigée vers le support de piston (7) deux dents courbées respectivement le long d'un demi-cercle en forme de plan oblique, adaptées aux dents (32) en forme de section de filet.

2. Valve selon la revendications 1, caractérisée en ce que la rondelle frein (20) présente sur son côté dirigé vers le support de piston (7) trois dents en saillie (35, 36) dont deux sont diamétralement opposées et qui, toutes, s'engagent dans des rainures correspondantes (39, 40) du support de piston (7) de sorte que la rondelle frein (20) présente un bourrelet (41) substantiellement annulaire qui entoure une flasque formée à l'extrémité du support de piston (7).

3. Valve selon les revendication 1 ou 2, caractérisée en ce que le filet intérieur (8') du support de piston (7) se termine sur le fond du filet à deux butées (37) diamétralement opposées, associées aux dents (31) du filet (8) de la broche (10).

## Claims

1. Valve consisting of a pot-shaped head (9) into which projects an axially secured spindle (10) provided with a thread (8), onto which spindle (10) a piston holder (7) which is sealed against the inner wall of the head (9) and secured to prevent rotation is screwed, where said piston holder (7) has hooks (22) on its face end which encompass the flange (18) of a piston (1) which is centred in the piston holder (7) and protrudes from the head (9), characterised therein that the piston (1) comprises crossed ribs (12, 13) and two diametrically opposed projections (17) and that the piston head protrudes from a bush (3) which is located on the open front end of the pot-shaped head (9) and supports the gasket (2) which encompasses the head, where the projections (17) of the piston (1) engage grooves(14) in the bush (3) and four outlet apertures (4) are formed in the sleeve of the bush (3), which apertures are located between the crossed ribs (12, 13) of the piston (1) and covered by a gasket (15) inserted in grooves (16) in the ribs (12, 13) when the valve is closed, that the thread (8) of the spindle (10) at its free end merges into two diametrically opposed teeth (31) and two diametrically opposed teeth (32) having the shape of the thread cross-section are formed on the shaft end of the thread (8), and that a slotted retaining washer (20) is slid on to the spindle (10) on the end of the piston holder (7) opposed to the piston (1), where said retaining washer (20) has two teeth (34) constructed in the form of respectively alongside a semicircle bent inclined planes adapted to the teeth (32) in the shape of the thread cross-section on its side facing the piston holder (7).

2. Valve as claimed in claim 1, characterised therein that the retaining washer (20) has three protruding teeth (35, 36) on its side facing the piston holder (7), of which two are diametrically opposed and which all engage corresponding grooves (39, 40) in the piston holder (7), and that the retaining washer (20) has an essentially annular bead (41) which encloses a flange (38) at the end of the piston holder (7).

3. Valve as claimed in either of claims 1 or 2, characterised therein that the inner thread (81) of the piston holder (7) ends at the thread base in two diametrically opposed stops assigned to the teeth (31) of the thread (8) of the spindle (10).
